# EUROPEAN PATENT APPLICATION

(11) **EP 4 310 669 A1**
(43) Date of publication of application: **24.01.2024**
(21) Application number: 21933863.9
(22) Date of filing: 31.03.2021
(51) Int. Cl.: G06F 8/65, B60R 16/02

(54) **VERSION MANAGEMENT METHOD AND APPARATUS**

(71) Applicant: Huawei Technologies Co., Ltd., Shenzhen, Guangdong 518129 (CN)
(72) Inventor: MA, Tao, Shenzhen, Guangdong 518129 (CN); ZHOU, Zheng, Shenzhen, Guangdong 518129 (CN)
(74) Representative: Epping - Hermann - Fischer
(86) International application number: PCT/CN2021/084713
(87) International publication number: WO 2022/205200

(57) **Abstract**

This application provides a version management method and apparatus, to help improve upgrade efficiency. The method may include: obtaining a plurality of upgrade packages and indication information of the plurality of upgrade packages, where the indication information indicates a group to which each of the plurality of upgrade packages belongs, the group includes at least a first upgrade package group or a second upgrade package group, and importance of the first upgrade package group is higher than importance of the second upgrade package group; obtaining installation results of the plurality of upgrade packages, where the installation results of the upgrade packages include an installation success or an installation failure; and performing, based on the installation results of the plurality of upgrade packages and the indication information, version management on an upgrade object corresponding to each upgrade package.

## Description

### TECHNICAL FIELD

This application relates to the version management field, and more specifically, to a version management method and apparatus.

### BACKGROUND

With the development of society and the progress of science and technology, intelligent vehicles are more widely used in the fields of intelligent driving and self driving. An intelligent vehicle is a complex system, including dozens of or even hundreds of electronic control units (electronic control units, ECUs). Various complex functions of the intelligent vehicle are implemented through collaboration between ECUs.

A manufacturer or service provider (original equipment manufacturer, OEM) of an intelligent vehicle maintains and upgrades various functions of the intelligent vehicle mainly by upgrading ECUs related to these functions. Usually, the ECUs in the intelligent vehicle are upgraded at a granularity of a vehicle.

However, as long as there is an upgrade package that fails to be installed in an existing vehicle upgrade task, the vehicle upgrade task fails. In this case, ECUs corresponding to all upgrade packages in the vehicle upgrade task need to be rolled back to a version before execution of the current vehicle upgrade task. Therefore, upgrade efficiency is low.

### SUMMARY

Embodiments of this application provide a version management method and apparatus, to help improve upgrade efficiency.

According to a first aspect, an embodiment of this application provides a version management method. The method may be applied to a version management system. The version management system includes a server and an intelligent vehicle. The method may include: The server generates a plurality of upgrade packages and indication information of the plurality of upgrade packages, where the indication information indicates a group to which each of the plurality of upgrade packages belongs, the group includes at least a first upgrade package group or a second upgrade package group, and importance of the first upgrade package group is higher than importance of the second upgrade package group; the server sends the plurality of upgrade packages and the indication information to the intelligent vehicle; the intelligent vehicle obtains installation results of the plurality of upgrade packages, where the installation results include an installation success or an installation failure; and the intelligent vehicle performs, based on the installation results of the plurality of upgrade packages and the indication information, version management on an upgrade object corresponding to the plurality of upgrade packages.

It can be learned that, according to the version management method provided in this application, the server divides the plurality of upgrade packages into at least two groups, for example, the first upgrade package group and the second upgrade package group, and the indication information indicates the group to which each upgrade package belongs. Accordingly, the intelligent vehicle performs, based on the installation results of the plurality of upgrade packages and the indication information, version management on the plurality of upgrade packages in a unit of group, helping improve upgrade efficiency.

Optionally, the server in this application is an apparatus that can be used by a vendor or an OEM to provide a version management service for a terminal. For example, the version management service may include managing an upgrade task of the terminal and releasing the upgrade task to the terminal. For example, the upgrade task may include upgrading the plurality of upgrade packages, and the like.

Optionally, the server may be deployed on a cloud.

Optionally, the terminal in this application is an apparatus that supports the version management service provided by the server.

Optionally, the terminal in this application may be a transportation tool or an intelligent device.

For example, the transportation tool may include a motor vehicle (for example, an unmanned vehicle, an intelligent vehicle, an electric vehicle, or a digital vehicle), an uncrewed aerial vehicle, a rail car, a traffic light, and the like.

For example, the intelligent device may include a mobile phone, a tablet computer, a laptop computer, a personal digital assistant, a point-of-sale terminal, an on-board computer, an augmented reality device, a virtual reality device, a wearable device, a vehicle-mounted terminal, and the like.

In a possible implementation, wireless communication may be performed between the server and the terminal.

For clarity, in this embodiment of this application, only an example in which the terminal is an intelligent vehicle is used for description. However, it should be understood that this embodiment of this application is not limited thereto.

It should be noted that, in this embodiment of this application, that the upgrade task is successful means that the plurality of upgrade packages included in the upgrade task are all successfully upgraded.

It should be further noted that, in this embodiment of this application, that the upgrade packages are successfully upgraded may include that the upgrade packages are successfully installed.

Optionally, that the upgrade packages are successfully upgraded may further include that the upgrade packages are successfully activated.

Optionally, the plurality of upgrade packages may be divided into at least two groups, and different groups have different importance levels.

For example, the plurality of upgrade packages are divided into two groups: the first upgrade package group and the second upgrade package group. The first upgrade package group includes at least one first upgrade package in the plurality of upgrade packages. The second upgrade package group includes at least one second upgrade package in the plurality of upgrade packages.

Importance of the at least one first upgrade package is higher than importance of the at least one second upgrade package.

Optionally, the server may group the plurality of upgrade packages in a plurality of grouping manners. This is not limited in this embodiment of this application.

In a first possible implementation, the server may group the upgrade packages based on a correlation with a main function to be upgraded in a current upgrade task.

In a second possible implementation, the server may further group the upgrade packages based on a correlation with a major security defect to be rectified in a current upgrade task.

In a third possible implementation, the server may further group the upgrade packages based on whether there is an admission function and/or a parameter modification function.

It should be noted that the grouping manner in this embodiment of this application is a manner of grouping the upgrade packages in the current upgrade task. Optionally, in different upgrade tasks, manners of grouping the upgrade packages may be the same or may be different. This is not limited in this application. For example, upgrade packages in an upgrade task 1 may be grouped in a first grouping manner, and upgrade packages in an upgrade task 2 may be grouped in a second grouping manner.

Optionally, the indication information may explicitly or implicitly indicate the group to which each upgrade package belongs. This is not limited in this application.

In a possible implementation, the indication information may include a name of each upgrade package. That is, the name of each upgrade package implicitly indicates the group to which each upgrade package belongs.

In another possible implementation, the plurality of upgrade packages may be packed into the first upgrade package group and the second upgrade package group. The indication information may include a name of the first upgrade package group and/or a name of the second upgrade package group. That is, the name of the first upgrade package group and/or the name of the second upgrade package group implicitly indicate/indicates the group to which each upgrade package belongs.

According to the version management method provided in this embodiment of this application, a name of an upgrade package or a name of an upgrade package group implicitly indicates the group to which each upgrade package belongs. That is, no additional information is required to indicate the group to which each upgrade package belongs, so that an amount of transmitted data may be reduced.

In still another possible implementation, the indication information may explicitly indicate the group of each upgrade package. In other words, the indication information may include an identifier of each upgrade package in the first upgrade package group and/or an identifier of each upgrade package in the second upgrade package group.

According to the version management method provided in this embodiment of this application, the indication information explicitly indicates the group to which each upgrade package belongs, so that a computing capability and a computing amount of the intelligent vehicle may be reduced.

Optionally, the server may send the plurality of upgrade packages and the indication information to the intelligent vehicle in a plurality of manners. This is not limited in this embodiment of this application.

In a possible implementation, the server may separately send the plurality of upgrade packages and the indication information to the terminal.

Optionally, a sequence of sending the plurality of upgrade packages and the indication information is not limited in this embodiment of this application.

According to the version management method provided in this embodiment of this application, separately sending the plurality of upgrade packages and the indication information can improve transmission flexibility.

In another possible implementation, the server may send the current upgrade task to the terminal.

The current upgrade task includes the plurality of upgrade packages and the indication information.

For example, the current upgrade task may be obtained after the plurality of upgrade packages and the indication information are packed.

According to the version management method provided in this embodiment of this application, sending the plurality of upgrade packages and the indication information together can reduce an amount of transmitted data and further improve transmission efficiency.

Optionally, in a process of executing the current upgrade task, the intelligent vehicle may receive the plurality of upgrade packages and the indication information from the server only when obtaining the plurality of upgrade packages and the indication information for the first time. For example, after obtaining the plurality of upgrade packages and the indication information for the first time, the intelligent vehicle may store the plurality of upgrade packages and the indication information in a storage area, and directly obtain the plurality of upgrade packages and the indication information from the storage area when required subsequently, that is, without obtaining again the plurality of upgrade packages and the indication information from the server.

Optionally, before the intelligent vehicle obtains the installation results of the plurality of upgrade packages, the intelligent vehicle may install the plurality of upgrade packages, to obtain the installation results of the plurality of upgrade packages.

Optionally, before the intelligent vehicle performs, based on the installation results of the plurality of upgrade packages and the indication information, version management on the upgrade object corresponding to the plurality of upgrade packages, the server may further send version information of the plurality of upgrade packages to the terminal. The version information includes first version information and/or second version information. The first version information indicates that a vehicle version number corresponding to the plurality of upgrade packages is a first vehicle version number. The second version information indicates that a group version number corresponding to the first upgrade package group is a first group version number. Accordingly, the intelligent vehicle receives the version information from the server.

Optionally, the server may separately send the version information, the indication information, and the plurality of upgrade packages. Alternatively, the server may separately send the current upgrade task (including the plurality of upgrade packages and the version information) and the version information. Alternatively, the server may release the current upgrade task. The current upgrade task includes the version information, the indication information, and the plurality of upgrade packages. This is not limited in this embodiment of this application.

Optionally, the first version information may include the first vehicle version number. Similarly, the second version information may include the first group version number.

With reference to three different cases (including case 1, case 2, and case 3) corresponding to the installation results of the plurality of upgrade packages, the following separately describes how the intelligent vehicle performs version management on the upgrade object corresponding to the plurality of upgrade packages in the different cases.

Case 1: Each of the plurality of upgrade packages is successfully installed.

In a possible implementation, if each of the plurality of upgrade packages is successfully installed, the intelligent vehicle determines that the current upgrade task is completed.

Optionally, if the version information includes only the first version information, the intelligent vehicle may update a current vehicle version number of the intelligent vehicle from a second vehicle version number to the first vehicle version number. The second vehicle version number is a vehicle version number before the first vehicle version number. That is, the second vehicle version number is a vehicle version number before the current upgrade task is executed.

Optionally, if the version information includes the first version information and the second version information, the intelligent vehicle may update the current vehicle version number of the intelligent vehicle from the second vehicle version number to the first vehicle version number, and update a current group version number to the first group version number. A second group version number is a group version number before the first group version number. That is, the second group version number is a group version number before the current upgrade task is executed.

In conclusion, the current upgrade task is successful in case 1.

Case 2: Some or all of upgrade packages that fail to be installed belong to the first upgrade package group.

In a possible implementation, the intelligent vehicle determines, based on the installation results of the plurality of upgrade packages and the indication information, that some or all of the upgrade packages that fail to be installed belong to the first upgrade package group. The intelligent vehicle rolls back a version of an upgrade object corresponding to each of the plurality of upgrade packages.

In other words, provided that there is an upgrade package that fails to be installed in the first upgrade package group, regardless of whether there is an upgrade package that fails to be installed in the second upgrade package group, the intelligent vehicle rolls back the version of the upgrade object corresponding to each of the plurality of upgrade packages.

Optionally, the intelligent vehicle keeps current version information of the intelligent vehicle unchanged.

In conclusion, in case 2, the current upgrade task fails, and the version management method provided in embodiments of this application needs to be subsequently performed again, to complete the current upgrade task.

Case 3: The upgrade packages that fail to be installed belong to the second upgrade package group. In a possible implementation, the intelligent vehicle determines, based on the installation results of the plurality of upgrade packages and the indication information, that the upgrade packages that fail to be installed belong to the second upgrade package group. The intelligent vehicle rolls back only a version of an upgrade object corresponding to each upgrade package in the second upgrade package group.

In other words, provided that an upgrade package that fails to be installed does not belong to the first upgrade package group, the intelligent vehicle needs to roll back only the version of the upgrade object corresponding to each upgrade package in a second upgrade package.

Optionally, if the version information includes only the first version information, the intelligent vehicle may update a current vehicle version number of the intelligent vehicle from a second vehicle version number to a third vehicle version number. The third vehicle version number indicates that all upgrade packages in the first upgrade package group are successfully installed, but there is an upgrade package that fails to be installed in the second upgrade package group.

Optionally, if the version information includes the first version information and the second version information, the intelligent vehicle may update a current group version number from a second group version number to the first group version number, and keep the current vehicle version number as the second vehicle version number unchanged.

In conclusion, in case 3, the current upgrade task is partially successful. That is, the first upgrade package group is successfully upgraded, but the second upgrade package group fails to be upgraded.

It can be learned that, according to the version management method provided in this application, the server divides the plurality of upgrade packages into at least two groups, for example, the first upgrade package group and the second upgrade package group, and the indication information indicates the group to which each upgrade package belongs. Accordingly, the intelligent vehicle determines, based on the installation results of the plurality of upgrade packages and the indication information, that the upgrade package that fails to be installed does not belong to the first upgrade package group (that is, all upgrade packages in the first upgrade package group are successfully installed). In this case, the intelligent vehicle may roll back only a version of an upgrade object corresponding to an upgrade package in the second upgrade package group, and does not need to roll back a version of an upgrade object corresponding to an upgrade package in the first upgrade package group. Therefore, it can be ensured that an upgrade object corresponding to an upgrade package that is successfully installed in the first upgrade package group can normally use an updated version.

In addition, in a subsequent process of the current upgrade task, the intelligent vehicle does not need to reinstall an upgrade package in the first upgrade package group, and only needs to reinstall an upgrade package in the second upgrade package group, so that upgrade efficiency can be improved.

Optionally, in case 3, the method may further include: The intelligent vehicle reinstalls each upgrade package in the second upgrade package group, to obtain an installation result of each upgrade package in the second upgrade package group.

Optionally, before the intelligent vehicle reinstalls each upgrade package in the second upgrade package group, the intelligent vehicle may obtain the second upgrade package group.

Optionally, a manner of obtaining the second upgrade package group is not limited in this embodiment of this application.

In a possible implementation, after obtaining the plurality of upgrade packages from the server, the intelligent vehicle may store the plurality of upgrade packages in the storage area. The intelligent vehicle may obtain the second upgrade package group from the storage area.

In another possible implementation, the intelligent vehicle may obtain again the second upgrade package group.

For example, the intelligent vehicle may send first version synchronization information of the plurality of upgrade packages to the server. The first version synchronization information indicates that the current vehicle version number is the third vehicle version number. Accordingly, the server receives the first version synchronization information from the intelligent vehicle, and sends again the second upgrade package group to the intelligent vehicle based on the third vehicle version number. Accordingly, the intelligent vehicle receives the second upgrade package group sent again by the server.

For example, the intelligent vehicle may send second version synchronization information of the plurality of upgrade packages to the server. The second version synchronization information indicates that the current vehicle version number is the second vehicle version number and the current group version number is the first group version number. Accordingly, the server receives the second version synchronization information from the intelligent vehicle; and sends again the second upgrade package group to the intelligent vehicle based on a fact that the current vehicle version number (namely, the second vehicle version number) is different from the vehicle version number (namely, the first vehicle version number) corresponding to the plurality of upgrade packages, but the current group version number (namely, the first group version number) is the same as the group version number (namely, the first group version number) corresponding to the first upgrade package group. Accordingly, the intelligent vehicle receives the second upgrade package group sent again by the server.

According to the version management method provided in this embodiment of this application, the second upgrade package group fails to be upgraded for the first time, and the upgrade failure may be caused by an upgrade package (for example, the upgrade package is damaged or missing) in the second upgrade package group. Therefore, the server sends again the second upgrade package group to the intelligent vehicle, helping improve an upgrade success rate. In addition, the server sends again only the second upgrade package group to the intelligent vehicle, that is, without sending again each of the plurality of upgrade packages, so that an amount of transmitted data can be reduced, thereby improving upgrade efficiency.

Optionally, the server may alternatively send again the plurality of upgrade packages to the intelligent vehicle based on the first version synchronization information or the second version synchronization information. Accordingly, the intelligent vehicle obtains the second upgrade package group from the plurality of upgrade packages based on the indication information.

According to the version management method provided in this embodiment of this application, the server only needs to determine whether the plurality of upgrade packages need to be sent again, and the intelligent vehicle obtains the second upgrade package group from the plurality of upgrade packages. In this way, a computing amount and a computing complexity of the server are reduced.

Optionally, if each upgrade package in the second upgrade package group is successfully installed, the intelligent vehicle may update the current vehicle version number to the first vehicle version number. That is, the current upgrade task is successful.

According to a second aspect, an embodiment of this application further provides a version management method. The method may be applied to a terminal. The method may include: obtaining a plurality of upgrade packages and indication information of the plurality of upgrade packages, where the indication information indicates a group to which each of the plurality of upgrade packages belongs, the group includes at least a first upgrade package group or a second upgrade package group, and importance of the first upgrade package group is higher than importance of the second upgrade package group; obtaining installation results of the plurality of upgrade packages, where the installation results of the upgrade packages include an installation success or an installation failure; and performing, based on the installation results of the plurality of upgrade packages and the indication information, version management on an upgrade object corresponding to each upgrade package.

It can be learned that, according to the version management method provided in this application, the plurality of upgrade packages received by the terminal are divided into at least two groups, for example, the first upgrade package group and the second upgrade package group, and the received indication information indicates the group to which each upgrade package belongs. The terminal performs version management on the plurality of upgrade packages in a unit of group, helping improve upgrade efficiency.

In a possible implementation, the performing, based on the installation results of the plurality of upgrade packages and the indication information, version management on the plurality of upgrade packages includes: determining, based on the installation results of the plurality of upgrade packages and the indication information, that none of upgrade packages that fail to be installed belongs to the first upgrade package group; and rolling back a version of an upgrade object corresponding to each upgrade package in the second upgrade package group.

It can be learned that, according to the version management method provided in this application, the terminal determines, based on the installation results of the plurality of upgrade packages and the indication information, that the upgrade package that fails to be installed does not belong to the first upgrade package group (that is, all upgrade packages in the first upgrade package group are successfully installed). In this case, the terminal may roll back only a version of an upgrade object corresponding to an upgrade package in the second upgrade package group, and does not need to roll back a version of an upgrade object corresponding to an upgrade package in the first upgrade package group. Therefore, it can be ensured that an upgrade object corresponding to an upgrade package that is successfully installed in the first upgrade package group can normally use an updated version.

In a possible implementation, the method further includes: obtaining first version information of the plurality of upgrade packages, where the first version information indicates that a vehicle version number corresponding to the plurality of upgrade packages is a first vehicle version number; and the rolling back a version of an upgrade object corresponding to each upgrade package in the second upgrade package group includes: rolling back the version of the upgrade object corresponding to each upgrade package in the second upgrade package group to a version corresponding to a second vehicle version number, where the second vehicle version number is a vehicle version number before the first vehicle version number.

In a possible implementation, the method further includes: updating a current vehicle version number to a third vehicle version number, where the third vehicle version number indicates that all upgrade packages in the first upgrade package group are successfully installed, but there is an upgrade package that fails to be installed in the second upgrade package group.

In a possible implementation, the method further includes: sending first version synchronization information to a server, where the first version synchronization information indicates that the current vehicle version number is the third vehicle version number; and receiving the second upgrade package group from the server.

In a possible implementation, the method further includes: obtaining second version information of the plurality of upgrade packages, where the second version information indicates that a group version number corresponding to the first upgrade package group is a first group version number; and updating a current group version number to the first group version number.

In a possible implementation, the method further includes: sending second version synchronization information to a server, where the second version synchronization information indicates that a current vehicle version number is the second vehicle version number and the current group version number is the first group version number; and receiving the second upgrade package group from the server.

According to the version management method provided in this embodiment of this application, the second upgrade package group fails to be upgraded for the first time, and the upgrade failure may be caused by an upgrade package (for example, the upgrade package is damaged or missing) in the second upgrade package group. Therefore, the terminal receives again the second upgrade package group from the server, helping improve an upgrade success rate. In addition, the terminal may obtain again only the second upgrade package group from the server, that is, without obtaining again each of the plurality of upgrade packages, so that an amount of transmitted data can be reduced, thereby improving upgrade efficiency.

In a possible implementation, the method further includes: obtaining re-received installation results of upgrade packages in the second upgrade package group; determining that all upgrade packages in the second upgrade package group are successfully installed; and updating the current vehicle version number to the first vehicle version number.

It can be learned that, according to the version management method provided in this embodiment of this application, if an upgrade package in the first upgrade package group is successfully installed, but some or all of upgrade packages in a second upgrade package fail to be installed, in a subsequent process of a current upgrade task, the terminal does not need to reinstall an upgrade package in the first upgrade package group, and only needs to reinstall an upgrade package in the second upgrade package group, so that upgrade efficiency can be improved.

In a possible implementation, the performing, based on the installation results of the plurality of upgrade packages and the indication information, version management on the plurality of upgrade packages includes: if some or all of the upgrade packages that fail to be installed belong to the first upgrade package group, rolling back a version of the upgrade object corresponding to each of the plurality of upgrade packages.

In a possible implementation, the upgrade object corresponding to each upgrade package is an electronic control unit or software.

It can be learned that, according to the version management method provided in this embodiment of this application, the upgrade object may be an electronic control unit or software, so that flexibility of version management is improved.

For content not described in the second aspect, refer to related descriptions in the first aspect.

According to a third aspect, an embodiment of this application further provides a version management method. The method may be applied to a server. The method may include: generating a plurality of upgrade packages and indication information of the plurality of upgrade packages, where the indication information indicates a group to which each of the plurality of upgrade packages belongs, the group includes at least a first upgrade package group or a second upgrade package group, and importance of the first upgrade package group is higher than importance of the second upgrade package group; and sending the plurality of upgrade packages and the indication information to a terminal.

It can be learned that, according to the version management method provided in this application, the server divides the plurality of upgrade packages into at least two groups, for example, the first upgrade package group and the second upgrade package group, and the indication information indicates the group to which each upgrade package belongs. This enables the terminal to perform version management on the plurality of upgrade packages in a unit of group, helping improve upgrade efficiency.

In a possible implementation, the method further includes: receiving first version synchronization information from the terminal, where the first version synchronization information indicates that a current vehicle version number is a third vehicle version number, and the third vehicle version number indicates that all upgrade packages in the first upgrade package group are successfully installed, but there is an upgrade package that fails to be installed in the second upgrade package group; and sending again the second upgrade package group to the terminal based on the third vehicle version number.

In a possible implementation, the method further includes: receiving second version synchronization information from the terminal, where the second version synchronization information indicates that a current vehicle version number is a second vehicle version number and a current group version number is a first group version number; and sending again the second upgrade package group to the terminal based on a fact that the current vehicle version number is different from a vehicle version number corresponding to the plurality of upgrade packages, but the current group version number is the same as a group version number corresponding to the first upgrade package group.

According to the version management method provided in this embodiment of this application, the second upgrade package group fails to be upgraded for the first time, and the upgrade failure may be caused by an upgrade package (for example, the upgrade package is damaged or missing) in the second upgrade package group. Therefore, the server sends again the second upgrade package group to the terminal, helping improve an upgrade success rate. In addition, the server sends again only the second upgrade package group to the terminal, that is, without sending again each of the plurality of upgrade packages, so that an amount of transmitted data can be reduced, thereby improving upgrade efficiency.

For content not described in the third aspect, refer to related descriptions in the first aspect.

According to a fourth aspect, an embodiment of this application further provides a version management apparatus, configured to perform the method according to any one of the second aspect or the possible implementations of the second aspect. Specifically, the version management apparatus may include a unit configured to perform the method according to any one of the second aspect or the possible implementations of the second aspect.

Optionally, the version management apparatus may be applied to a server.

According to a fifth aspect, an embodiment of this application further provides a version management apparatus, configured to perform the method according to any one of the third aspect or the possible implementations of the third aspect. Specifically, the version management apparatus may include a unit configured to perform the method according to any one of the third aspect or the possible implementations of the third aspect.

Optionally, the version management apparatus may be applied to a terminal. For example, the terminal may be an intelligent vehicle.

According to a sixth aspect, an embodiment of this application further provides a server. The apparatus includes at least one processor, and a transceiver. Further, the at least one processor is coupled to the transceiver. The at least one processor is configured to execute instructions, so that the server implements the method according to any one of the second aspect or the possible implementations of the second aspect.

Optionally, the server may further include a memory. The memory, the transceiver, and the at least one processor are coupled, and the memory is configured to store the foregoing instructions.

According to a seventh aspect, an embodiment of this application further provides a terminal. The apparatus includes at least one processor, and a transceiver. Further, the at least one processor is coupled to the transceiver. The at least one processor is configured to execute instructions, so that the terminal implements the method according to any one of the third aspect or the possible implementations of the third aspect.

Optionally, the terminal may further include a memory. The memory, the transceiver, and the at least one processor are coupled, and the memory is configured to store the foregoing instructions.

According to an eighth aspect, this application further provides a computer-readable storage medium, configured to store a computer program. The computer program is used to implement the method according to any one of the foregoing aspects or the possible implementations of the foregoing aspects.

According to a ninth aspect, this application further provides a computer program product including instructions. When the computer program product runs on a computer, the computer is enabled to implement the method according to any one of the foregoing aspects or the possible implementations of the foregoing aspects.

According to a tenth aspect, this application further provides a chip, including an input interface, an output interface, and at least one processor. Optionally, the chip apparatus further includes a memory. The at least one processor is configured to execute code in the memory. When the at least one processor executes the code, the chip implements the method according to any one of the foregoing aspects or the possible implementations of the foregoing aspects.

The version management apparatus, the server, the terminal, the computer storage medium, the computer program product, and the chip provided in embodiments of this application are all configured to perform the version management method provided above. Therefore, for beneficial effects that can be achieved by the version management apparatus, the server, the terminal, the computer storage medium, the computer program product, and the chip, refer to beneficial effects in the version management method provided above. Details are not described herein again.

### BRIEF DESCRIPTION OF DRAWINGS

FIG. 1 is a schematic block diagram of a version management system 100 according to an embodiment of this application;
FIG. 2 is a schematic block diagram of a terminal 120 according to an embodiment of this application;
FIG. 3 is a schematic flowchart of a version management method 300 according to an embodiment of this application;
FIG. 4 is a schematic block diagram of a control apparatus 400 according to an embodiment of this application;
FIG. 5 is a schematic block diagram of a control apparatus 500 according to an embodiment of this application; and
FIG. 6 is a schematic block diagram of a chip 600 according to an embodiment of this application.

### DESCRIPTION OF EMBODIMENTS

The following describes in detail technical solutions in embodiments of this application with reference to the accompanying drawings in embodiments of this application.

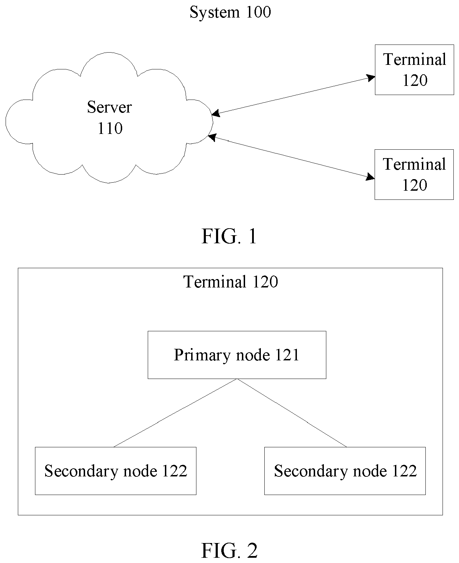

FIG. 1 is a schematic diagram of a version management system 100 according to an embodiment of this application. As shown in FIG. 1, the system 100 may include a server 110 and at least one terminal 120. The server 110 and the at least one terminal 120 may communicate with each other.

Optionally, the server 110 in this application is an apparatus that can be used by a vendor or an OEM to provide a version management service for the terminal 120. For example, the version management service may include managing an upgrade task of the terminal and releasing the upgrade task to the terminal. For example, the upgrade task may include upgrading a plurality of upgrade packages, and the like.

Optionally, the server 110 may be deployed on a cloud.

Optionally, the terminal in this application is an apparatus that supports the version management service provided by the server 110.

Optionally, the terminal in this application may be a transportation tool or an intelligent device.

For example, the transportation tool may include a motor vehicle (for example, an unmanned vehicle, an intelligent vehicle, an electric vehicle, or a digital vehicle), an uncrewed aerial vehicle, a rail car, a traffic light, and the like.

For example, the intelligent device may include a mobile phone, a tablet computer, a laptop computer, a personal digital assistant, a point-of-sale terminal, an on-board computer, an augmented reality device, a virtual reality device, a wearable device, a vehicle-mounted terminal, and the like.

In a possible implementation, wireless communication may be performed between the server 110 and the terminal 120.

For example, the wireless communication in this application may be implemented through a communications network. The communications network may be a local area network, or may be a wide area network that is transferred by using a relay (relay) device, or may include a local area network and a wide area network. When the communications network is a local area network, for example, the communications network may be a Wi-Fi hotspot network, a Wi-Fi point-to-point (point-to-point, P2P) network, a Bluetooth network, a ZigBee network, a near-field communication (near-field communication, NFC) network, a future possible universal short-range communications network, or the like. When the communications network is a wide area network, the communications network may be a third generation mobile communications technology (3rd-generation wireless telephone technology, 3G) network, a fourth generation mobile communications technology (4th generation mobile communications technology, 4G) network, a fifth generation mobile communications technology (5th-generation mobile communications technology, 5G) network, a public land mobile network (public land mobile network, PLMN), the Internet (Internet), or the like. This is not limited in this embodiment of this application. Optionally, the server 110 and the terminal 120 may support wireless communication by using an over-the-air (over-the-air, OTA) technology.

FIG. 2 is a schematic block diagram of a terminal 120 according to an embodiment of this application. As shown in FIG. 2, the terminal 120 may include a primary node 121 and a plurality of secondary nodes 122. The secondary node 122 is deployed and mainly responsible for version management (for example, version upgrade, version rollback, and/or version number update) of an upgrade object. The primary node 121 is mainly responsible for managing and coordinating the plurality of secondary nodes 122 to jointly complete the upgrade task.

For example, the primary node 121 is configured to receive an upgrade package from the server, and send, to the secondary node 122, an upgrade package of an upgrade object for which the secondary node 122 is responsible. The secondary node 122 is configured to install the upgrade package, and send an installation result of the upgrade package to the primary node 121. The primary node 121 is configured to control, based on the installation result of the upgrade package sent by each secondary node 122, the secondary node 122 to perform version management (for example, version rollback, and/or version number update).

Optionally, a specific form of the upgrade object is not limited in this embodiment of this application. For example, the upgrade object may be an electronic control unit (electronic control unit, ECU) or software in the ECU. One ECU may support installation of at least one piece of software.

For example, the plurality of secondary nodes 122 each may be deployed in different ECUs. The primary node 121 and any primary node 122 may be deployed in a same ECU, or the primary node 121 and the plurality of secondary nodes 122 may be deployed in different ECUs. This is not limited in this embodiment of this application.

The foregoing describes the system 100 to which a version management method provided in this application is applied, and a structure of the terminal 120 in the system 100. The following further describes the version management method provided in this application.

For clarity, in this embodiment of this application, only an example in which the terminal 120 is an intelligent vehicle is used for description. However, it should be understood that this embodiment of this application is not limited thereto.

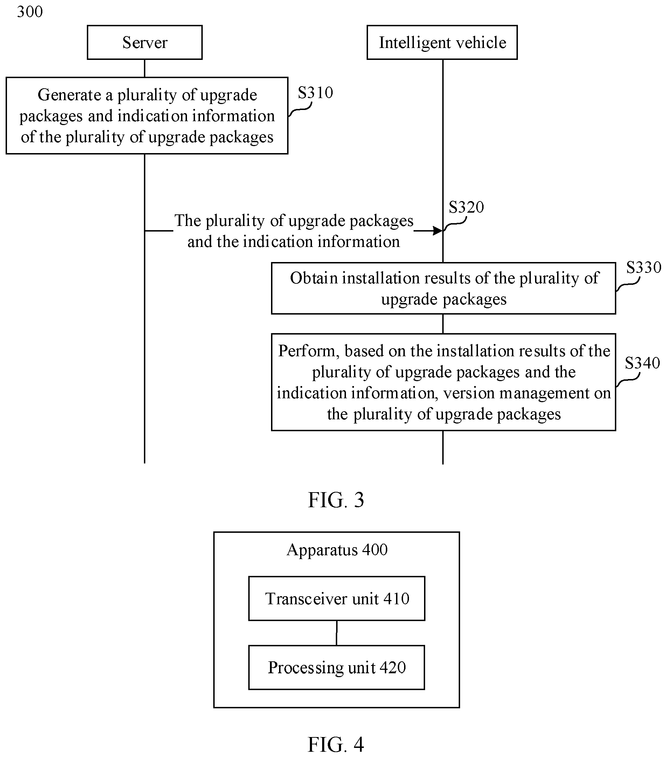

FIG. 3 is a schematic flowchart of a version management method 300 according to an embodiment of this application. The method 300 may be applied to the system 100 shown in FIG. 1.

It should be noted that the method 300 is only described by using a version management method in a process of finishing a complete upgrade task (referred to as a "current upgrade task" below) as an example. However, this application is not limited thereto. For a version management method in another upgrade task, refer to the method 300.

S310: A server generates a plurality of upgrade packages and indication information of the plurality of upgrade packages, where the indication information indicates a group to which each of the plurality of upgrade packages belongs, the group includes at least a first upgrade package group or a second upgrade package group, and importance of the first upgrade package group is higher than importance of the second upgrade package group.

It should be noted that, in this embodiment of this application, that the upgrade task is successful means that the plurality of upgrade packages included in the upgrade task are all successfully upgraded.

It should be further noted that, in this embodiment of this application, that the upgrade packages are successfully upgraded may include that the upgrade packages are successfully installed.

Optionally, that the upgrade packages are successfully upgraded may further include that the upgrade packages are successfully activated.

Optionally, the plurality of upgrade packages may be divided into at least two groups, and different groups have different importance levels.

For example, the plurality of upgrade packages are divided into two groups: the first upgrade package group and the second upgrade package group. The first upgrade package group includes at least one first upgrade package in the plurality of upgrade packages. The second upgrade package group includes at least one second upgrade package in the plurality of upgrade packages. Importance of the at least one first upgrade package is higher than importance of the at least one second upgrade package.

Optionally, the server may group the plurality of upgrade packages in a plurality of grouping manners. This is not limited in this embodiment of this application.

In a first possible implementation, the server may group the upgrade packages based on a correlation with a main function to be upgraded in the current upgrade task.

For example, the current upgrade task includes an upgrade package 1 to an upgrade package 10.

The upgrade package 1, the upgrade package 3, and the upgrade package 4 (also referred to as key upgrade packages or core upgrade packages) are closely related to the main function to be upgraded in the current upgrade task, and are the most important. The upgrade package 6 and the upgrade package 9 have a strong dependency relationship with the foregoing key upgrade packages (or the core upgrade packages), and are of medium importance. The remaining upgrade package 2, upgrade package 5, upgrade package 7, upgrade package 8, and upgrade package 10 have a weak relationship with the main function, and are unimportant. Accordingly, the server may determine upgrade packages that are the most important and of medium importance as the first upgrade package group, and determine upgrade packages that are unimportant as the second upgrade package group. Alternatively, the server may determine upgrade packages that are the most important as the first upgrade package group, and determine upgrade packages that are of medium importance and unimportant as the second upgrade package group.

In a second possible implementation, the server may further group the upgrade packages based on a correlation with a major security defect to be rectified in the current upgrade task.

For example, the current upgrade task includes an upgrade package 1 to an upgrade package 10.

The upgrade package 1, the upgrade package 3, and the upgrade package 4 are closely related to the major security defect to be rectified in the current upgrade task, and are important. The upgrade package 2, the upgrade package 5, the upgrade package 6, the upgrade package 7, the upgrade package 8, the upgrade package 9, and the upgrade package 10 are weakly related to the major security defect to be rectified in the current upgrade task, and are unimportant. Accordingly, the server may determine upgrade packages that are important as the first upgrade package group, and determine upgrade packages that are unimportant as the second upgrade package group.

In a third possible implementation, the server may further group the upgrade packages based on whether there is an admission function and/or a parameter modification function.

For example, the current upgrade task includes an upgrade package 1 to an upgrade package 10.

The upgrade package 1, the upgrade package 3, and the upgrade package 4 have an admission function and/or a parameter modification function, and are important. The upgrade package 2, the upgrade package 5, the upgrade package 6, the upgrade package 7, the upgrade package 8, the upgrade package 9, and the upgrade package 10 do not have the admission function and/or the parameter modification function, and are unimportant. Accordingly, the server may determine upgrade packages that are important as the first upgrade package group, and determine upgrade packages that are unimportant as the second upgrade package group.

It should be noted that the grouping manner in this embodiment of this application is a manner of grouping the upgrade packages in the current upgrade task. Optionally, in different upgrade tasks, manners of grouping the upgrade packages may be the same or may be different. This is not limited in this application. For example, upgrade packages in an upgrade task 1 may be grouped in a first grouping manner, and upgrade packages in an upgrade task 2 may be grouped in a second grouping manner.

Optionally, the indication information may explicitly or implicitly indicate the group to which each upgrade package belongs. This is not limited in this application.

In a possible implementation, the indication information may include a name of each upgrade package. That is, the name of each upgrade package implicitly indicates the group to which each upgrade package belongs.

For example, a name of an upgrade package 1 is "A1.1". "A1" before "." indicates that the upgrade package 1 is an upgrade package of an upgrade object 1, and " 1" after "." indicates that the upgrade package 1 belongs to the first upgrade package group.

For example, a name of an upgrade package 2 is "A2.0". "A2" before "." indicates that the upgrade package 2 is an upgrade package of an upgrade object 2, and "0" after "." indicates that the upgrade package 2 belongs to the second upgrade package group.

In another possible implementation, the plurality of upgrade packages may be packed into the first upgrade package group and the second upgrade package group. The indication information may include a name of the first upgrade package group and/or a name of the second upgrade package group. That is, the name of the first upgrade package group and/or the name of the second upgrade package group implicitly indicate/indicates the group to which each upgrade package belongs. For example, an upgrade package group named "C1" is the first upgrade package group, and an upgrade package group named "C2" is the second upgrade package group.

In still another possible implementation, the indication information may explicitly indicate the group of each upgrade package. In other words, the indication information may include an identifier of each upgrade package in the first upgrade package group and/or an identifier of each upgrade package in the second upgrade package group.

For example, the indication information may include Table 1 and/or Table 2.

**Table 1**

| | | | | | |
|---|---|---|---|---|---|
| Second upgrade package group | A2 | A5 | A7 | A8 | A10 |

Table 1 may indicate that the second upgrade package group includes an upgrade package 2 (namely, A2), an upgrade package 5 (namely, A5), an upgrade package 7 (namely, A7), an upgrade package 8 (namely, A8), and an upgrade package 10 (namely, A10). Accordingly, an upgrade package 1 (namely, A1), an upgrade package 3 (namely, A3), an upgrade package 4 (namely, A4), an upgrade package 6 (namely, A6), and an upgrade package 9 (namely, A9) belong to the first upgrade package group.

**Table 2**

| | | | | | |
|---|---|---|---|---|---|
| First upgrade package group | A1 | A3 | A4 | A6 | A9 |

Table 2 may indicate that the first upgrade package group includes the upgrade package 1 (namely, A1), the upgrade package 3 (namely, A3), the upgrade package 4 (namely, A4), the upgrade package 6 (namely, A6), and the upgrade package 9 (namely, A9). Accordingly, the upgrade package 2 (namely, A2), the upgrade package 5 (namely, A5), the upgrade package 7 (namely, A7), the upgrade package 8 (namely, A8), and the upgrade package 10 (namely, A10) belong to the second upgrade package group.

S320: The server sends the plurality of upgrade packages and the indication information to an intelligent vehicle, and accordingly, the intelligent vehicle receives the plurality of upgrade packages and the indication information from the server.

Optionally, the server may send the plurality of upgrade packages and the indication information to the intelligent vehicle in a plurality of manners. This is not limited in this embodiment of this application.

In a possible implementation, the server may separately send the plurality of upgrade packages and the indication information to the terminal.

Optionally, a sequence of sending the plurality of upgrade packages and the indication information is not limited in this embodiment of this application.

In another possible implementation, the server may send the current upgrade task to the terminal.

The current upgrade task includes the plurality of upgrade packages and the indication information.

For example, the current upgrade task may be obtained after the plurality of upgrade packages and the indication information are packed.

Optionally, a manner in which the intelligent vehicle obtains the plurality of upgrade packages and the indication information is not limited in this application.

In a possible implementation, in a process of executing the current upgrade task, the intelligent vehicle and the server may perform S310 and S320 when the plurality of upgrade packages and the indication information are obtained for the first time. For example, after obtaining the plurality of upgrade packages and the indication information for the first time, the intelligent vehicle may store the plurality of upgrade packages and the indication information in a storage area, and directly obtain the plurality of upgrade packages and the indication information from the storage area when required subsequently, that is, without obtaining again the plurality of upgrade packages and the indication information from the server.

In another possible implementation, the intelligent vehicle may further receive the plurality of upgrade packages and the indication information from another device. For example, the another device may be another terminal (for example, another intelligent vehicle) or another device that stores the plurality of upgrade packages and the indication information.

In still another possible implementation, the plurality of upgrade packages and the indication information may be pre-stored or preset in the storage area of the intelligent vehicle. In other words, the intelligent vehicle may obtain the plurality of upgrade packages and the indication information from the storage area.

The foregoing describes only an example in which the intelligent vehicle obtains the plurality of upgrade packages and the indication information in a same obtaining manner. However, this embodiment of this application is not limited thereto. Optionally, the intelligent vehicle may separately obtain the plurality of upgrade packages and the indication information in different obtaining manners. This is not limited in this embodiment of this application.

For example, the intelligent vehicle may receive the plurality of upgrade packages from the server, and obtain the pre-stored indication information from the storage area.

For example, the intelligent vehicle may receive the plurality of upgrade packages from the another intelligent vehicle, and receive the indication information from the server.

In a possible implementation, the intelligent vehicle shown in FIG. 2 is used as an example. The server may send the plurality of upgrade packages and the indication information to a primary node in the intelligent vehicle. Accordingly, the primary node receives the plurality of upgrade packages and the indication information from the server.

S330: The intelligent vehicle obtains installation results of the plurality of upgrade packages, where the installation results include an installation success or an installation failure.

Optionally, S330 may include: The intelligent vehicle installs the plurality of upgrade packages, to obtain the installation results of the plurality of upgrade packages.

The intelligent vehicle shown in FIG. 2 is used as an example. The primary node of the intelligent vehicle may send each upgrade package to a secondary node corresponding to each upgrade package. Accordingly, the secondary node corresponding to each upgrade package installs each upgrade package, to obtain an installation result of each upgrade package; and sends the installation result of each upgrade package to the primary node.

S340: The intelligent vehicle performs, based on the installation results of the plurality of upgrade packages and the indication information, version management on an upgrade object corresponding to the plurality of upgrade packages.

Optionally, before S340 is performed, the server may further send version information of the plurality of upgrade packages to the terminal. The version information includes first version information and/or second version information. The first version information indicates that a vehicle version number corresponding to the plurality of upgrade packages is a first vehicle version number. The second version information indicates that a group version number corresponding to the first upgrade package group is a first group version number. Accordingly, the intelligent vehicle receives the version information from the server.

Optionally, the server may separately send the version information, the indication information, and the plurality of upgrade packages. Alternatively, the server may separately send the current upgrade task (including the plurality of upgrade packages and the version information) and the version information. Alternatively, the server may release the current upgrade task. The current upgrade task includes the version information, the indication information, and the plurality of upgrade packages. This is not limited in this embodiment of this application.

Optionally, the first version information may include the first vehicle version number. Similarly, the second version information may include the first group version number.

With reference to three different cases (including case 1, case 2, and case 3) corresponding to the installation results of the plurality of upgrade packages, the following separately describes how the intelligent vehicle performs version management on the upgrade object corresponding to the plurality of upgrade packages in S340 in the different cases.

Case 1: Each of the plurality of upgrade packages is successfully installed.

In a possible implementation, if each of the plurality of upgrade packages is successfully installed, the intelligent vehicle determines that the current upgrade task is completed.

Optionally, if the version information includes only the first version information, the intelligent vehicle may update a current vehicle version number of the intelligent vehicle to the first vehicle version number.

The intelligent vehicle shown in FIG. 2 is used as an example. The primary node updates the current vehicle version number to the first vehicle version number.

For example, before S340 is performed, current version information of the intelligent vehicle is shown in Table 3, and version information corresponding to the plurality of upgrade packages is shown in Table 4. After S340 is performed, updated version information of the intelligent vehicle is shown in Table 5.

It should be noted that a second vehicle version number in this application is a vehicle version number before the first vehicle version number. That is, the second vehicle version number is a vehicle version number before the current upgrade task is executed.

**Table 3**

| Intelligent vehicle | |
|---|---|
| Vehicle version number | V1.0 (namely, second vehicle version number) |

**Table 4**

| First vehicle upgrade package | |
|---|---|
| Vehicle version number | V2.0 (namely, first vehicle version number) |

**Table 5**

| Intelligent vehicle (updated) | |
|---|---|
| Vehicle version number | V2.0 |

Optionally, if the version information includes the first version information and the second version information, the intelligent vehicle may update the current vehicle version number of the intelligent vehicle to the first vehicle version number, and update a current group version number to the first group version number.

The intelligent vehicle shown in FIG. 2 is used as an example. The primary node updates the current vehicle version number of the intelligent vehicle to the first vehicle version number, and updates the current group version number to the first group version number.

For example, before S340 is performed, the current version information of the intelligent vehicle is shown in Table 6, and the version information corresponding to the plurality of upgrade packages is shown in Table 7. After S340 is performed, the updated version information of the intelligent vehicle is shown in Table 8.

It should be noted that a second group version number in this application is a group version number before the first group version number. That is, the second group version number is a group version number before the current upgrade task is executed.

**Table 6**

| Intelligent vehicle | |
|---|---|
| Vehicle version number | V1.0 (namely, second vehicle version number) |
| Group version number | V1.0.0 (namely, second group version number) |

**Table 7**

| First vehicle upgrade package | |
|---|---|
| Vehicle version number | V2.0 (namely, first vehicle version number) |
| Group version number | V2.0.0 (namely, first group version number) |

**Table 8**

| Intelligent vehicle (updated) | |
|---|---|
| Vehicle version number | V2.0 |
| Group version number | V2.0.0 |

In conclusion, the current upgrade task is successful in case 1.

Case 2: Some or all of upgrade packages that fail to be installed belong to the first upgrade package group.

In a possible implementation, the intelligent vehicle determines, based on the installation results of the plurality of upgrade packages and the indication information, that some or all of the upgrade packages that fail to be installed belong to the first upgrade package group. The intelligent vehicle rolls back a version of an upgrade object corresponding to each of the plurality of upgrade packages.

In other words, provided that there is an upgrade package that fails to be installed in the first upgrade package group, regardless of whether there is an upgrade package that fails to be installed in the second upgrade package group, the intelligent vehicle rolls back the version of the upgrade object corresponding to each of the plurality of upgrade packages.

The intelligent vehicle shown in FIG. 2 is used as an example. The primary node determines, based on the installation results of the plurality of upgrade packages and the indication information, that some or all of the upgrade packages that fail to be installed belong to the first upgrade package group; and sends first rollback indication information to a secondary node corresponding to the plurality of upgrade packages. The first rollback indication information indicates rolling back the version of the upgrade object corresponding to the plurality of upgrade packages. Accordingly, the secondary node corresponding to the plurality of upgrade packages rolls back, based on the first rollback indication information, the version of the upgrade object corresponding to each of the plurality of upgrade packages.

Optionally, the intelligent vehicle keeps the current version information of the intelligent vehicle unchanged.

For example, before S340 is performed, the current version information of the intelligent vehicle is shown in Table 3, and the version information corresponding to the plurality of upgrade packages is shown in Table 4. After S340 is performed, the updated version information of the intelligent vehicle is still shown in Table 3.

For example, before S340 is performed, the current version information of the intelligent vehicle is shown in Table 6, and the version information corresponding to the plurality of upgrade packages is shown in Table 7. After S340 is performed, the updated version information of the intelligent vehicle is still shown in Table 6.

In conclusion, in case 2, the current upgrade task fails, and steps 310 to 340 need to be performed again subsequently, to complete the current upgrade task.

Case 3: The upgrade packages that fail to be installed belong to the second upgrade package group. In a possible implementation, the intelligent vehicle determines, based on the installation results of the plurality of upgrade packages and the indication information, that the upgrade packages that fail to be installed belong to the second upgrade package group. The intelligent vehicle rolls back only a version of an upgrade object corresponding to each upgrade package in the second upgrade package group.

In other words, provided that an upgrade package that fails to be installed does not belong to the first upgrade package group, the intelligent vehicle needs to roll back only the version of the upgrade object corresponding to each upgrade package in a second upgrade package.

The intelligent vehicle shown in FIG. 2 is used as an example. The primary node determines, based on the installation results of the plurality of upgrade packages and the indication information, that the upgrade packages that fail to be installed belong to the second upgrade package group; and sends second rollback indication information to a secondary node corresponding to the second upgrade package group. The second rollback indication information indicates rolling back a version of an upgrade object corresponding to the second upgrade package group. Accordingly, the secondary node corresponding to the second upgrade package group rolls back, based on the second rollback indication information, the version of the upgrade object corresponding to each upgrade package in the second upgrade package group.

Optionally, if the version information includes only the first version information, the intelligent vehicle may update a current vehicle version number of the intelligent vehicle to a third vehicle version number. The third vehicle version number indicates that all upgrade packages in the first upgrade package group are successfully installed, but there is an upgrade package that fails to be installed in the second upgrade package group.

The intelligent vehicle shown in FIG. 2 is used as an example. The primary node may update the current vehicle version number of the intelligent vehicle to the third vehicle version number.

For example, before S340 is performed, current version information of the intelligent vehicle is shown in Table 3, and version information corresponding to the plurality of upgrade packages is shown in Table 4. After S340 is performed, updated version information of the intelligent vehicle is shown in Table 9.

**Table 9**

| Intelligent vehicle (updated) | |
|---|---|
| Vehicle version number | V1.1 (namely, third vehicle version number) |

Optionally, if the version information includes the first version information and the second version information, the intelligent vehicle may update a current group version number to the first group version number, and keep the current vehicle version number unchanged.

The intelligent vehicle shown in FIG. 2 is used as an example. The primary node may update the current group version number to the first group version number, and keep the current vehicle version number unchanged.

For example, before S340 is performed, the current version information of the intelligent vehicle is shown in Table 6, and the version information corresponding to the plurality of upgrade packages is shown in Table 7. After S340 is performed, the updated version information of the intelligent vehicle is shown in Table 10.

**Table 10**

| Intelligent vehicle (updated) | |
|---|---|
| Vehicle version number | V1.0 |
| Group version number | V2.0.0 |

In conclusion, in case 3, the current upgrade task is partially successful. That is, the first upgrade package group is successfully upgraded, but the second upgrade package group fails to be upgraded.

It can be learned that, according to the version management method provided in this application, the server divides the plurality of upgrade packages into at least two groups, for example, the first upgrade package group and the second upgrade package group, and the indication information indicates the group to which each upgrade package belongs. Accordingly, the intelligent vehicle determines, based on the installation results of the plurality of upgrade packages and the indication information, that the upgrade package that fails to be installed does not belong to the first upgrade package group (that is, all upgrade packages in the first upgrade package group are successfully installed). In this case, the intelligent vehicle may roll back only the version of the upgrade object corresponding to the upgrade package in the second upgrade package group, and does not need to roll back a version of an upgrade object corresponding to an upgrade package in the first upgrade package group. Therefore, it can be ensured that an upgrade object corresponding to an upgrade package that is successfully installed in the first upgrade package group can normally use an updated version.

In addition, in a subsequent process of the current upgrade task, the intelligent vehicle does not need to reinstall an upgrade package in the first upgrade package group, and only needs to reinstall an upgrade package in the second upgrade package group, so that upgrade efficiency can be improved.

Optionally, in case 3, after S340 is performed, S341 and S342 (not shown in the figure) may be further included.

S341: The intelligent vehicle reinstalls each upgrade package in the second upgrade package group, to obtain an installation result of each upgrade package in the second upgrade package group.

Optionally, before S341 is performed, the intelligent vehicle may obtain the second upgrade package group.

The intelligent vehicle shown in FIG. 2 is used as an example. The primary node may obtain again the second upgrade package group. Accordingly, S341 may include: The primary node sends each upgrade package in the second upgrade package group to a secondary node corresponding to the second upgrade package group; and accordingly, the secondary node corresponding to the second upgrade package group reinstalls each upgrade package in the second upgrade package group, to obtain the installation result of each upgrade package in the second upgrade package group, and sends the installation result of each upgrade package in the second upgrade package group to the primary node.

Optionally, a manner of obtaining the second upgrade package group is not limited in this embodiment of this application.

In a possible implementation, the intelligent vehicle may obtain the second upgrade package group from the storage area, that is, obtain the second upgrade package group from the plurality of upgrade packages stored in the storage area after S310 and S320 are performed.

In another possible implementation, the intelligent vehicle may obtain again the second upgrade package group.

For example, the intelligent vehicle may send first version synchronization information of the plurality of upgrade packages to the server. The first version synchronization information indicates that the current vehicle version number is the third vehicle version number. Accordingly, the server receives the first version synchronization information from the intelligent vehicle, and sends again the second upgrade package group to the intelligent vehicle based on the third vehicle version number. Accordingly, the intelligent vehicle receives the second upgrade package group sent again by the server.

For example, the intelligent vehicle may send second version synchronization information of the plurality of upgrade packages to the server. The second version synchronization information indicates that the current vehicle version number is the second vehicle version number and the current group version number is the first group version number. Accordingly, the server receives the second version synchronization information from the intelligent vehicle; and sends again the second upgrade package group to the intelligent vehicle based on a fact that the current vehicle version number (namely, the second vehicle version number) is different from the vehicle version number (namely, the first vehicle version number) corresponding to the plurality of upgrade packages, but the current group version number (namely, the first group version number) is the same as the group version number (namely, the first group version number) corresponding to the first upgrade package group. Accordingly, the intelligent vehicle receives the second upgrade package group sent again by the server.

According to the version management method provided in this embodiment of this application, the second upgrade package group fails to be upgraded for the first time, and the upgrade failure may be caused by an upgrade package (for example, the upgrade package is damaged or missing) in the second upgrade package group. Therefore, the server sends again the second upgrade package group to the intelligent vehicle, helping improve an upgrade success rate. In addition, the server sends again only the second upgrade package group to the intelligent vehicle, that is, without sending again each of the plurality of upgrade packages, so that an amount of transmitted data can be reduced, thereby improving upgrade efficiency.

Optionally, the server may alternatively send again the plurality of upgrade packages to the intelligent vehicle based on the first version synchronization information or the second version synchronization information. Accordingly, the intelligent vehicle obtains the second upgrade package group from the plurality of upgrade packages based on the indication information.

The intelligent vehicle shown in FIG. 2 is used as an example. The primary node may send the first version synchronization information or the second version synchronization information to the server. Similarly, the primary node receives the second upgrade package group sent again by the server.

S342: If each upgrade package in the second upgrade package group is successfully installed, the intelligent vehicle updates the current vehicle version number to the first vehicle version number.

The intelligent vehicle shown in FIG. 2 is used as an example. If each upgrade package in the second upgrade package group is successfully installed, the primary node updates the current vehicle version number to the first vehicle version number.

For example, after S342 is performed, the updated version information shown in Table 9 is updated again to version information shown in Table 11.

**Table 11**

| Intelligent vehicle (updated again) | |
|---|---|
| Vehicle version number | V2.0 (namely, first vehicle version number) |

For example, after S342 is performed, the updated version information shown in Table 10 is updated again to version information shown in Table 12.

**Table 12**

| Intelligent vehicle (updated again) | |
|---|---|
| Vehicle version number | V2.0 |
| Group version number | V2.0.0 |

In conclusion, S341 and S342 are performed to further complete an upgrade of the second upgrade package group, so that the current upgrade task is successful.

The foregoing describes the version management method provided in the embodiment of this application with reference to FIG. 3. With reference to FIG. 4 to FIG. 6, the following describes a version management apparatus configured to perform the foregoing version management method.

It should be noted that the version management apparatus may be the server in the foregoing method embodiments, and can perform the methods implemented by the server in the foregoing method embodiments; or the version management apparatus may be the terminal (for example, the intelligent vehicle) in the foregoing method embodiments, and can perform the methods implemented by the terminal (for example, the intelligent vehicle) in the foregoing method embodiments.

It may be understood that, to implement the foregoing functions, the server or the terminal includes corresponding hardware and/or software modules for performing the functions. In combination with example algorithm steps described in embodiments disclosed in this specification, this application may be implemented by hardware or a combination of hardware and computer software.

Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the server or the terminal may be divided into functional modules based on the foregoing method examples. For example, each functional module may be obtained through division based on each corresponding function, or two or more functions may be integrated into one processing module. The integrated module may be implemented in a form of hardware. It should be noted that module division in this embodiment is an example and is only logical function division. In actual implementation, there may be another division manner.

When functional modules are obtained through division based on corresponding functions, FIG. 4 is a schematic diagram of a possible composition of the terminal or the server in the foregoing embodiments. As shown in FIG. 4, an apparatus 400 may include a transceiver unit 410 and a processing unit 420.

The processing unit 420 may control the transceiver unit 410 to implement the method performed by the terminal or the server in the foregoing method 200 embodiment, and/or another process used for the technology described in this specification.

It should be noted that all related content of the steps in the foregoing method embodiments may be cited in function descriptions of corresponding functional modules. Details are not described herein.

When an integrated unit is used, the apparatus 400 may include a processing unit, a storage unit, and a communications unit. The processing unit may be configured to control and manage an action of the apparatus 400, for example, may be configured to support the apparatus 400 in performing the steps performed by the foregoing units. The storage unit may be configured to support the apparatus 400 in storing program code, data, and the like. The communications unit may be configured to support communication between the apparatus 400 and another device.

The processing unit may be a processor or a controller. The processing unit may implement or execute various example logical blocks, modules, and circuits described with reference to content disclosed in this application. The processor may also be a combination for implementing computing functions, for example, a combination of one or more microprocessors, or a combination of a digital signal processor (digital signal processor, DSP) and a microprocessor. The storage unit may be a memory. The communications unit may be specifically a device, for example, a radio frequency circuit, a Bluetooth chip, a Wi-Fi chip, or the like that communicates with another electronic device.

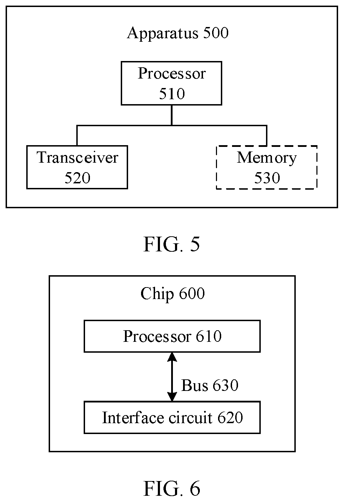

In a possible implementation, the terminal or the server in this embodiment of this application may be an apparatus 500 with a structure shown in FIG. 5. The apparatus 500 may be a schematic diagram of a structure of the terminal, or may be a schematic diagram of a structure of the server. The apparatus 500 includes a processor 510 and a transceiver 520. The processor 510 and the transceiver 520 communicate with each other through an internal connection path. The processor 510 may implement a related function implemented by the processing unit 420 in FIG. 4. The processor 510 may control the transceiver 520 to implement a related function implemented by the transceiver unit 410.

Optionally, the apparatus 500 may further include a memory 530. The processor 510, the transceiver 520, and the memory 530 communicate with each another through an internal connection path. The memory 530 may implement a related function implemented by the storage unit in FIG. 4.

An embodiment of this application further provides a computer storage medium. The computer storage medium stores computer instructions. When the computer instructions are run on an electronic device, the electronic device is enabled to perform the foregoing related method steps to implement the version management method in the foregoing embodiments.

An embodiment of this application further provides a computer program product. When the computer program product runs on a computer, the computer is enabled to perform the foregoing related steps to implement the version management method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the version management method in the foregoing method embodiments.

FIG. 6 is a schematic diagram of a structure of a chip 600. The chip 600 includes one or more processors 610, and an interface circuit 620. Optionally, the chip 600 may further include a bus 630.

The processor 610 may be an integrated circuit chip, and has a signal processing capability. During implementation, the foregoing method steps can be completed by hardware integrated logic circuits in the processor 610 or instructions in a form of software. The processor 610 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 620 may send or receive data, instructions, or information. The processor 610 may process the data, the instructions, or other information received through the interface circuit 620, and send, through the interface circuit 620, information obtained after processing.

Optionally, the chip further includes a memory. The memory may include a read-only memory and a random access memory, and provide operation instructions and data for the processor. A part of the memory may further include a non-volatile random-access memory (non-volatile random-access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the version management apparatus or the access version management apparatus in embodiments of this application. Optionally, the interface circuit 620 may be configured to output an execution result of the processor 610. For the version management method provided in the one or more embodiments of this application, refer to the foregoing embodiments. Details are not described herein again.

It should be noted that functions corresponding to each of the processor 610 and the interface circuit 620 may be implemented by using a hardware design, may be implemented by using a software design, or may be implemented by using a combination of software and hardware. This is not limited herein.

An embodiment of this application further provides a terminal. The terminal includes the apparatus 400 in FIG. 4, the apparatus 500 in FIG. 5, or the chip 600 in FIG. 6.

An embodiment of this application further provides a server. The server includes the apparatus 400 in FIG. 4, the apparatus 500 in FIG. 5, or the chip 600 in FIG. 6.

It should be noted that the version management apparatus, the computer storage medium, the computer program product, the chip, the terminal, or the server provided in this embodiment are all configured to perform the corresponding method provided above. Therefore, for beneficial effects that can be achieved by the version management apparatus, the computer storage medium, the computer program product, the chip, the terminal, or the server, refer to the beneficial effects in the corresponding method provided above. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Aversion management method, comprising:
obtaining a plurality of upgrade packages and indication information of the plurality of upgrade packages, wherein the indication information indicates a group to which each of the plurality of upgrade packages belongs, the group comprises at least a first upgrade package group or a second upgrade package group, and importance of the first upgrade package group is higher than importance of the second upgrade package group;
obtaining installation results of the plurality of upgrade packages, wherein the installation results of the upgrade packages comprise an installation success or an installation failure; and
performing, based on the installation results of the plurality of upgrade packages and the indication information, version management on an upgrade object corresponding to each upgrade package.

2. The method according to claim 1, wherein the performing, based on the installation results of the plurality of upgrade packages and the indication information, version management on the plurality of upgrade packages comprises:
determining, based on the installation results of the plurality of upgrade packages and the indication information, that none of upgrade packages that fail to be installed belongs to the first upgrade package group; and
rolling back a version of an upgrade object corresponding to each upgrade package in the second upgrade package group.

3. The method according to claim 2, wherein the method further comprises:
obtaining first version information of the plurality of upgrade packages, wherein the first version information indicates that a vehicle version number corresponding to the plurality of upgrade packages is a first vehicle version number; and
the rolling back a version of an upgrade object corresponding to each upgrade package in the second upgrade package group comprises:
rolling back the version of the upgrade object corresponding to each upgrade package in the second upgrade package group to a version corresponding to a second vehicle version number, wherein the second vehicle version number is a vehicle version number before the first vehicle version number.

4. The method according to claim 3, further comprising:
updating a current vehicle version number to a third vehicle version number, wherein the third vehicle version number indicates that all upgrade packages in the first upgrade package group are successfully installed, but there is an upgrade package that fails to be installed in the second upgrade package group.

5. The method according to claim 4, further comprising:
sending first version synchronization information to a server, wherein the first version synchronization information indicates that the current vehicle version number is the third vehicle version number; and
receiving the second upgrade package group from the server.

6. The method according to claim 2 or 3, further comprising:
obtaining second version information of the plurality of upgrade packages, wherein the second version information indicates that a group version number corresponding to the first upgrade package group is a first group version number; and
updating a current group version number to the first group version number.

7. The method according to claim 6, further comprising:
sending second version synchronization information to a server, wherein the second version synchronization information indicates that a current vehicle version number is the second vehicle version number and the current group version number is the first group version number; and
receiving the second upgrade package group from the server.

8. The method according to claim 5 or 7, further comprising:
obtaining re-received installation results of upgrade packages in the second upgrade package group;
determining that all upgrade packages in the second upgrade package group are successfully installed; and
updating the current vehicle version number to the first vehicle version number.

9. The method according to claims 1 to 8, wherein the performing, based on the installation results of the plurality of upgrade packages and the indication information, version management on the plurality of upgrade packages comprises:
if some or all of the upgrade packages that fail to be installed belong to the first upgrade package group, rolling back a version of the upgrade object corresponding to each of the plurality of upgrade packages.

10. The method according to any one of claims 1 to 9, wherein the upgrade object corresponding to each upgrade package is an electronic control unit or software.

11. A version management method, comprising:
generating a plurality of upgrade packages and indication information of the plurality of upgrade packages, wherein the indication information indicates a group to which each of the plurality of upgrade packages belongs, the group comprises at least a first upgrade package group or a second upgrade package group, and importance of the first upgrade package group is higher than importance of the second upgrade package group; and
sending the plurality of upgrade packages and the indication information to a terminal.

12. The method according to claim 11, further comprising:
receiving first version synchronization information from the terminal, wherein the first version synchronization information indicates that a current vehicle version number is a third vehicle version number, and the third vehicle version number indicates that all upgrade packages in the first upgrade package group are successfully installed, but there is an upgrade package that fails to be installed in the second upgrade package group; and
sending again the second upgrade package group to the terminal based on the third vehicle version number.

13. The method according to claim 11, further comprising:
receiving second version synchronization information from the terminal, wherein the second version synchronization information indicates that a current vehicle version number is a second vehicle version number and a current group version number is a first group version number; and
sending again the second upgrade package group to the terminal based on a fact that the current vehicle version number is different from a vehicle version number corresponding to the plurality of upgrade packages, but the current group version number is the same as a group version number corresponding to the first upgrade package group.

14. Aversion management apparatus, comprising a processor and a transceiver, wherein the processor is coupled to the transceiver;
the transceiver is configured to obtain a plurality of upgrade packages and indication information of the plurality of upgrade packages, wherein the indication information indicates a group to which each of the plurality of upgrade packages belongs, the group comprises at least a first upgrade package group or a second upgrade package group, and importance of the first upgrade package group is higher than importance of the second upgrade package group; and
the processor is configured to: obtain installation results of the plurality of upgrade packages, wherein the installation results of the upgrade packages comprise an installation success or an installation failure; and perform, based on the installation results of the plurality of upgrade packages and the indication information, version management on an upgrade object corresponding to each upgrade package.

15. The apparatus according to claim 14, wherein the processor is specifically configured to:
determine, based on the installation results of the plurality of upgrade packages and the indication information, that none of upgrade packages that fail to be installed belongs to the first upgrade package group; and
roll back a version of an upgrade object corresponding to each upgrade package in the second upgrade package group.

16. The apparatus according to claim 15, wherein
the processor is further configured to obtain first version information of the plurality of upgrade packages, wherein the first version information indicates that a vehicle version number corresponding to the plurality of upgrade packages is a first vehicle version number; and
the processor is specifically configured to roll back the version of the upgrade object corresponding to each upgrade package in the second upgrade package group to a version corresponding to a second vehicle version number, wherein the second vehicle version number is a vehicle version number before the first vehicle version number.

17. The apparatus according to claim 16, wherein
the processor is further configured to update a current vehicle version number to a third vehicle version number, wherein the third vehicle version number indicates that all upgrade packages in the first upgrade package group are successfully installed, but there is an upgrade package that fails to be installed in the second upgrade package group.

18. The apparatus according to claim 17, wherein the transceiver is configured to:
send first version synchronization information to a server, wherein the first version synchronization information indicates that the current vehicle version number is the third vehicle version number; and
receive the second upgrade package group from the server.

19. The apparatus according to claim 15 or 16, wherein
the processor is further configured to: obtain second version information of the plurality of upgrade packages, wherein the second version information indicates that a group version number corresponding to the first upgrade package group is a first group version number; and update a current group version number to the first group version number.

20. The apparatus according to claim 19, wherein the transceiver is configured to:
send second version synchronization information to a server, wherein the second version synchronization information indicates that a current vehicle version number is the second vehicle version number and the current group version number is the first group version number; and
receive the second upgrade package group from the server.

21. The apparatus according to claim 18 or 20, wherein the processor is further configured to:
obtain re-received installation results of upgrade packages in the second upgrade package group;
determine that all upgrade packages in the second upgrade package group are successfully installed; and
update the current vehicle version number to the first vehicle version number.

22. The apparatus according to any one of claims 14 to 21, wherein the processor is specifically configured to:
if some or all of the upgrade packages that fail to be installed belong to the first upgrade package group, roll back a version of the upgrade object corresponding to each of the plurality of upgrade packages.

23. The apparatus according to any one of claims 14 to 22, wherein the upgrade object corresponding to each upgrade package is an electronic control unit or software.

24. Aversion management apparatus, comprising a processor and a transceiver, wherein the processor is coupled to the transceiver;
the processor is configured to generate a plurality of upgrade packages and indication information of the plurality of upgrade packages, wherein the indication information indicates a group to which each of the plurality of upgrade packages belongs, the group comprises at least a first upgrade package group or a second upgrade package group, and importance of the first upgrade package group is higher than importance of the second upgrade package group; and
the transceiver is configured to send the plurality of upgrade packages and the indication information to a terminal.

25. The apparatus according to claim 24, wherein the transceiver is configured to:
receive first version synchronization information from the terminal, wherein the first version synchronization information indicates that a current vehicle version number is a third vehicle version number, and the third vehicle version number indicates that all upgrade packages in the first upgrade package group are successfully installed, but there is an upgrade package that fails to be installed in the second upgrade package group; and
send again the second upgrade package group to the terminal based on the third vehicle version number.

26. The apparatus according to claim 24, wherein the transceiver is further configured to:
receive second version synchronization information from the terminal, wherein the second version synchronization information indicates that a current vehicle version number is a second vehicle version number and a current group version number is a first group version number; and
send again the second upgrade package group to the terminal based on a fact that the current vehicle version number is different from a vehicle version number corresponding to the plurality of upgrade packages, but the current group version number is the same as a group version number corresponding to the first upgrade package group.

27. A chip apparatus, comprising at least one processor, and an interface circuit, wherein the at least one processor sends or receives a signal through the interface circuit, and when the at least one processor executes program code or instructions, the method according to any one of claims 1 to 10 or the method according to any one of claims 11 to 13 is implemented.

28. A computer-readable storage medium, configured to store a computer program, wherein the computer program comprises instructions to implement the method according to any one of claims 1 to 10 or the method according to any one of claims 11 to 13.

29. A computer program product, comprising instructions, wherein when the instructions are run on a computer or a processor, the computer or the processor is enabled to implement the method according to any one of claims 1 to 10 or the method according to any one of claims 11 to 13.
